# EUROPÄISCHE PATENTANMELDUNG

(11) **EP 1 099 399 A1**
(43) Veröffentlichungstag der Anmeldung: **16.05.2001**
(21) Anmeldenummer: 00124757.6
(22) Anmeldetag: 13.11.2000
(51) Int. Cl.: A47J 31/20

(54) **Kolbenfilter**

(30) Priorität: 12.11.1999 DE 19954625
(71) Anmelder: Elfo AG Sachseln, 6072 Sachseln (CH)
(72) Erfinder: Gasser, Ruedi, 6078 Bürglen (CH)
(74) Vertreter: Grünecker, Kinkeldey, Stockmair & Schwanhäusser Anwaltssozietät

(57) **Zusammenfassung**

Die Erfindung betrifft einen Kolbenfilter, wie er für die Kaffee- oder Teezubereitung mit einer Stabfilterkanne verwendet wird. Der Kolbenfilter ist innerhalb eines im wesentlichen hohlzylindrischen Zubereitungsgefäßes in eine Filterrichtung hin- und herbewegbar. Er ist ferner mit einem sich im wesentlichen quer zur Filterrichtung erstreckenden Filterelement (4) und mit einem quer zur Filterrichtung elastisch verformbaren, an der Innenwand des Zubereitungsgefäßes sich elastisch abstützenden Dichtelement (10,11) versehen. Das Dichtelement umgibt den Filterelement und dichtet den Zwischenraum zwischen Kolbenfilter und Innenwand des Zubereitungsgefäßes ab. Die bisher im Stand der Technik verwendeten Dichtelemente führen im Gebrauch derartiger Kolbenfilter nur zu einer ungenügenden Abdichtung zwischen Kolbenfilter und Innenwand des Zubereitungsgefäßes. Die Qualität des Kaffees und die Filtereigenschaften des Kolbenfilters lassen sich entscheidend dadurch verbessern, wenn erfindungsgemäß das Dichtelement in Filterrichtung im wesentlichen starr ist.

## Beschreibung

Die Erfindung betrifft einen Kolbenfilter für eine Stabfilterkanne, insbesondere für die Kaffeezubereitung, der innerhalb eines im wesentlichen hohlzylindrischen Zubereitungsgefäßes der Filterelementfilterkanne in eine Filterrichtung hin- und herbewegbar ist, und der mit einem sich im wesentlichen quer zur Filterrichtung erstreckenden Filterelement und mit einem quer zur Filterrichtung radialelastisch verformbaren, an der Innenwand des Zubereitungsgefäßes sich elastisch abstützenden Dichtelement versehen ist, welches das Filterelement umgibt.

Derartige Kolbenfilter werden vornehmlich bei Stabfilterkannen eingesetzt, mit denen eine besonders schonende und geschmackvolle Zubereitung von Kaffee möglich ist. Auch Tee kann mit derartigen Kolbenfiltern zubereitet werden. Bei Stabfilterkannen schüttet man zunächst in das leere Zubereitungsgefäß die gewünschte Menge an gemahlenen Kaffee und gießt anschließend heißes Wasser in das Zubereitungsgefäß. Nachdem der Kaffee einige Zeit gezogen ist, setzt man den Kolbenfilter in das Gefäß ein und drückt ihn in Filterrichtung durch das Kaffeepulver-Wasser-Gemisch langsam zu Boden. Durch diese Bewegung des Kolbenfilters in die Filterrichtung wird das Kaffeepulver-Wasser-Gemisch durch ein Filterelement am Kolbenfilter gepresst, dass sich im wesentlichen quer zur Filterrichtung erstreckt. Das Filterelement lässt das Kaffeepulver beim Durchdrücken nicht passieren, so dass sich am Ende der Bewegung des Kolbenfilters in Filterrichtung, wenn der Kolbenfilter sich nahe dem Boden des Zubereitungsgefäßes befindet, auf der einen, oberen Seite des Filterelementes im wesentlichen pulverfreies Kaffeegetränk und auf der anderen, unteren Seite sich im wesentlichen Kaffeesatz befindet.

Für die Qualität des sich oberhalb des Filterelementes befindlichen Kaffeegetränkes ist entscheidend, dass es kein Kaffeepulver enthält. Beim Filtervorgang muss oft ein beträchtlicher Druck auf den Kolbenfilter ausgeübt werden. Um zu vermeiden, dass bei diesem Druck Kaffeepulver zwischen dem Filterrand und der Innenwand des Zubereitungsgefäßes nach oben in den bereits gefilterten Abschnitt gespült wird, ist das Filterelement von einem Dichtelement umgeben. Das Dichtelement ist quer zur Filterrichtung elastisch verformbar und stützt sich an der Innenwand des Zubereitungsgefäßes elastisch ab. Gleichzeitig soll das Dichtelement gute Gleiteigenschaften aufweisen, so dass der Kolbenfilter leicht entlang der Innenwand des Zubereitungsgefäßes in Filterrichtung verschieblich ist.

Im Stand der Technik sind hierzu zwei Bauformen von Dichtelementen bekannt. In der einen, älteren Bauform, ist das Dichtelement als eine lange Spiralfeder ausgebildet, deren Längsachse um den Kolbenfilter gelegt ist, so dass die Spiralfeder gegen die Innenwand des Zubereitungsgefäßes drückt. Die Spiralfeder ist quer zur Filterrichtung nachgiebig. Da der Außendurchmesser des Kolbenfilters mit der umgelegten Spiralfeder größer als der Innendurchmesser des Zubereitungsgefäßes ist, drückt die Spiralfeder unter elastischer Verformung ihrer Windungen gegen die Innenwand des Zubereitungsgefäßes an.

Da zwischen den Spiralwindungen der Spiralfeder große Zwischenräume herrschen, gelangt bei dieser Ausgestaltung beim Durchdrücken des Kolbenfilters noch viel Kaffeepulver zwischen die Spiralfederwindungen hindurch auf die Oberseite des Filterelementes. Die Qualität des damit erzeugten Kaffeegetränks lässt zu wünschen übrig. Außerdem ist die Spiralfeder schwer zu reinigen.

In einer Weiterentwicklung des Kolbenfilters hat man daher auf die Spiralfeder verzichtet und das Filterelement des Kolbenfilters bis zur Innenwand des Zubereitungsgefäßes geführt und den Rand des Filterelementes entgegen der Filterrichtung umgebördelt. Der Rand des Filterelementes liegt somit an der Innenwand des Zubereitungsgefäßes im umgebördelten Bereich an. Um diesen umgebördelten Bereich des Filterelementes elastisch gegen die Innenwand des Zubereitungsgefäßes zu drücken, ist im umgebördelten Bereich ein Federbandring vorgesehen, der gegen die Filterrichtung etwas geneigt und dessen Durchmesser im spannungsfreien Zustand größer ist als der Innendurchmesser des Zubereitungsgefäßes. Bei dieser Ausgestaltung drückt der Federbandring das Filterelement als Dichtelement im umgebördelten Bereich an die Innenwand des Zubereitungsgefäßes.

Zwar erzielt man mit dieser Weiterentwicklung des Kolbenfilters bessere Filterergebnisse als mit dem spiralfederförmigen Dichtelement, doch gerät für einen optimalen Kaffeegenuss, vor allem bei starkem Durchdrücken des Kolbenfilters in Filterrichtung, nach wie vor zuviel Kaffeepulver in den Bereich oberhalb des Filterelementes.

Der Erfindung liegt daher die Aufgabe zugrunde, die bekannten Kolbenfilter so zu verbessern, dass wesentlich weniger Kaffeepulver in den gefilterten Bereich des Kaffeegetränkes gelangen kann.

Daneben soll das Filterelement schnell und einfach zu reinigen zu sein.

Diese Aufgabe wird für einen Kolbenfilter der eingangs genannten Art erfindungsgemäß dadurch gelöst, dass das Dichtelement ausschließlich radialelastisch und in Filterrichtung im wesentlichen starr ist.

Diese Lösung ist einfach und führt erstaunlicherweise bereits zu einer erheblichen Qualitätssteigerung bei der Kaffeezubereitung. Auch bei starkem Durchdrücken des Kolbenfilters kann kein Kaffeepulver mehr zwischen Kolbenfilter und Innenwand des Zubereitungsgefäßes dringen, da dem die Starrheit des Dichtelements entgegensteht. Die ausschließlich radiale Elastizität stellt eine wirksame Abdichtung der durch den Kolbenfilter geteilten Bereiche des Zubereitungsgefäßes sicher.

In einer besonders vorteilhaften Ausgestaltung kann das Dichtelement als radialelastischer Dichtring im wesentlichen ringförmig ausgestaltet sein. Der Dichtring hat eine geometrisch sehr einfache Form und ist demzufolge einfach und kostengünstig herzustellen. Durch die radialelastische Ausgestaltung ist der Dichtring quer zur Filterrichtung elastisch verformbar, aber in Filterrichtung im wesentlichen starr. Dabei kann der Außendurchmesser des Dichtringes im unverformten Ruhezustand in einer bevorzugten Ausgestaltung größer sein als der Innendurchmesser des Zubereitungsgefäßes.

Die Starrheit des Dichtringes und die gleichzeitige Elastizität quer zur Filterrichtung, also in radialer Richtung des Dichtringes, kann erreicht werden, wenn der Dichtring in einer weiteren vorteilhaften Ausgestaltung eine im wesentlichen sich in radialer Richtung erstreckende Aussparung aufweist. Diese Aussparung ermöglicht es, den Dichtring zu weiten oder den Durchmesser des Dichtringes zu verkleinern. Dabei sind die einander gegenüberliegenden Enden der Aussparung zweckmäßigerweise bei in das Zubereitungsgefäß eingesetztem Kolbenfilter weniger weit voneinander beabstandet, als bei aus dem Zubereitungsgefäß entferntem Kolbenfilter. In dieser vorteilhaften Ausgestaltung ist sichergestellt, dass sich der Dichtring unter der Federvorspannung seiner elastischen Verformung fest an die Innenwand des Zubereitungsgefäßes legt und damit den Zwischenraum zwischen Kolbenfilter und Innenwand des Zubereitungsgefäßes zuverlässig abdichtet.

In einer weiteren vorteilhaften Ausgestaltung kann der Dichtring so ausgestaltet sein, dass die einander gegenüberliegenden Enden der Aussparung bei vollständig vorgespanntem Dichtring im wesentlichen vollflächig aufeinander liegen. Durch das vollflächige Aufeinanderliegen der Enden der Aussparung bei vorgespanntem Dichtring wird vermieden, dass beim Filtervorgang Kaffeepulver von der einen Seite des Filterelementes durch die Aussparung des Dichtringes an die andere Seite des Filterelementes gelangen kann.

In einer vorteilhaften Ausgestaltung kann die Aussparung des Dichtringes durch zumindest zwei Zungen abgedeckt sein, die sich in Filterrichtung bei in das Zubereitungsgefäß eingesetztem Kolbenfilter überlappen. Dabei können die Zungen vorzugsweise unmittelbar aufeinanderliegen. Bei dieser Ausgestaltung ist sowohl die Größenveränderlichkeit des Dichtringes zur Anpassung an verschiedene Behälterdurchmesser als auch die vollständige Abdichtung durch den Dichtring aufgrund der sich überlappenden Zungen sichergestellt. Durch die mittels der Zungen abgedeckte Aussparung kann kein Kaffeemehl in den bereits gefilterten Bereich des Kaffees gelangen. Eine besonders effiziente Abdichtung wird erreicht, wenn die Zungen unmittelbar aufeinanderliegen, so daß auch zwischen den Zungen kein Kaffee durchfließen kann. In einer weiteren vorteilhaften Ausgestaltung können sich die Zungen in Filterrichtung bereits im unverformten Zustand des Dichtringes überlappen. Auf diese Weise wird die oben beschriebene Abdichtung durch die Zungen bei einer Vielzahl von Innendurchmessern gewährleistet, ohne daß der Dichtring vollständig zusammengedrückt werden muß.

In einer weiteren vorteilhaften Ausgestaltung kann der Kolbenfilter eine Dichtelementaufnahme aufweisen, in der das Dichtelement in Filterrichtung im wesentlichen unverschieblich gehalten ist. Durch die unverschiebliche Halterung in Filterrichtung wird vermieden, dass das Dichtelement beim Durchdrücken des Kolbenfilters in Filterrichtung nachgeben und somit Kaffeepulver zwischen Kolbenfilter und Innenwand des Zubereitungsgefäßes gelangen kann. Dabei kann die Dichtelementaufnahme eine in Umfangsrichtung umlaufende Aufnahmenut aufweisen, in die das Dichtelement einsetzbar ist. Eine Aufnahmenut ist einfach herzustellen und sichert auf einfache Weise die axiale Fixierung des Dichtelements.

In einer weiteren vorteilhaften Ausgestaltung kann die Aufnahme in Filterrichtung an einer Seite von einem als separaten Teil ausgebildeten Haltering ausgebildet sein. Damit lässt sich die Aufnahmenut bei der Montage des Kolbenfilters zum Einsetzen des Dichtelementes leicht öffnen. Nach Einsetzen des Dichtelementes wird der Haltering an eine Seite der Aufnahmenut angebracht und fixiert so das Dichtelement. Dazu sind verschiedene Befestigungsmethoden, wie Aufpressen, Kleben oder Verschweiße, beispielsweise mit Ultraschall möglich. In einer vorteilhaften Weiterbildung dieser Ausgestaltung kann der Haltering abnehmbar am Kolbenfilter gehalten sein, so dass der Haltering zur Entnahme des Dichtelements beispielsweise zum Reinigen wiederholt abnehmbar und am Kolbenfilter befestigbar sei.

In einer weiteren vorteilhaften Ausgestaltung kann auch die Dichtelementaufnahme als ein separates Teil ausgebildet sein, das mit einer das Filterelement haltenden Filterelementhalterung des Kolbenfilters verbunden ist. Auf diese Weise kann beim Zusammenbau des Kolbenfilters zunächst die Dichtelementaufnahme vorgefertigt werden und dann, beispielsweise passend zu einem Durchmesser eines vorbestimmten Gefäßes an jeweils identischen Filterelementhalterungen unterschiedliche Dichtelementaufnahmen angebracht werden. Dies kann kostengünstig dadurch geschehen, dass die Dichtelementaufnahme auf den Kolbenfilter bzw. die Filterelementhalterung aufgepresst ist.

In einer weiteren vorteilhaften Ausgestaltung können die Dichtelementaufnahmen und das Dichtelement jeweils mit einer Positionierhilfe versehen sein, die zusammenwirken und die Lage des Dichtelementes relativ zum Kolbenfilter bestimmen. Damit kann die Lage des Dichtungselementes in Umfangsrichtung des Kolbenfilters fixiert werden.

Insbesondere, wenn das Dichtelement als ein Dichtring mit einer Aussparung ausgestaltet ist, kann die Positionierhilfe auf der Seite der Dichtelementaufnahme bzw. der Dichtringaufnahme als ein Vorsprung ausgebildet sein, der bei in die Dichtelementaufnahme eingelegtem Dichtelement in eine Aussparung des Dichtelementes greift. Dies führt zu einer einfach herzustellenden Fixierung des Dichtringes in Umfangsrichtung, so dass sich dieser in der Dichtelementaufnahme nicht mehr drehen kann. Dies erleichtert das Einsetzen des Kolbenfilters in das Zubereitungsgefäß, da das Dichtelement fest gehalten ist und nicht durch Drehung ausweichen kann.

In einer weiteren, sehr vorteilhaften Ausgestaltung kann der Kolbenfilter mit zumindest zwei in Filterrichtung hintereinander angeordneten Dichtelementen versehen sein. Durch die Erhöhung der Anzahl der Dichtelemente ergibt sich eine verbesserte Abdichtung des Zwischenraumes zwischen Kolbenfilter und Innenwand des Zubereitungsgefäßes, so dass noch weniger Kaffeepulver beim Filtervorgang nach oben gespült werden und die Qualität des Kaffeegetränkes beeinflussen kann. Dies kann auf fertigungstechnisch einfache Weise dadurch realisiert werden, dass die Dichtelemente in der Dichtelementaufnahme aufeinanderliegend, vorzugsweise unmittelbar aufeinanderliegend, aufgenommen sind.

In einer weiteren vorteilhaften Aufgestaltung kann die Dichtmittelaufnahme zumindest zwei Positionierhilfen aufweisen, die jeweils mit einem Dichtmittel zusammenwirken. Bei dieser Ausgestaltung kann somit die Lage eines jeden Dichtmittels fixiert werden. In einer weiteren vorteilhaften Ausgestaltung kann dabei an den in Filterrichtung gelegenen Seiten der Dichtmittelaufnahme jeweils eine Positionierhilfe angeordnet sein, die jeweils mit der Positionierhilfe des diesen Seiten zugeordneten Dichtmittels zusammenwirkt. Dies kann beispielsweise dadurch geschehen, dass an jeder Seite der Aufnahmenut ein Vorsprung ausgebildet ist, der in die jeweilige Aussparung des an dieser Seite gelegenen Dichtelementes eingreift.

In einer weiteren vorteilhaften Ausgestaltung können die Positionierhilfen in Umfangsrichtung voneinander beabstandet sein. Damit weisen die Lagen der Dichtelemente einen Winkelversatz relativ zueinander auf, was die Dichtungseigenschaften bei nicht radialsymmetrischen Dichtelementen verbessert, da gleiche Bereiche der Dichtelemente nicht mehr übereinander liegen. So sind beispielsweise in dieser Ausgestaltung bei als Dichtringen ausgebildeten Dichtmitteln die Aussparungen um einen vorbestimmten Winkel in Umfangsrichtung versetzt und liegen nicht mehr übereinander. Auf diese Weise wird vermieden, dass durch die Aussparungen beider Dichtelemente Kaffeepulver den Kolbenfilter zwischen Kolbenfilter und Innenwand des Zubereitungsgefäßes passieren kann.

In einer weiteren vorteilhaften Ausgestaltung kann der Kolbenfilter mit einer sich in Filterrichtung weg vom Filterelement erstreckenden Kolbenstange verbunden sein, wobei die Kolbenstange das manuelle Durchdrücken des Kolbenfilters in Filterrichtung ermöglicht. Dazu ist die Kolbenstange zweckmäßigerweise mit einem Griff versehen. Auch kann der Kolbenfilter mit einem Deckel für das Zubereitungsgefäß versehen sein, wobei der Kolbenfilter im Deckel in Filterrichtung verschieblich gelagert ist. Damit ist bei eingesetztem Kolbenfilter und fertig gefiltertem Kaffee gleichzeitig gewährleistet, dass das Zubereitungsgefäß mit dem fertig zubereiteten Kaffee abgedeckt ist und der Kaffee nicht auskühlen kann.

In weiteren bevorzugten Ausgestaltungen können das Dichtelement und / oder die Dichtelementaufnahme aus Kunststoff, vorzugsweise einem Thermoplast gefertigt sein. Das Filterelement kann aus einem Metall, wie beispielsweise Edelstahl, gefertigt sein. Das Filterelement kann des weiteren aus einem Filtergewebe oder einer mit Löchern versehenen Scheibe gebildet sein.

Die erfindsgemäße Aufgabe wird auch durch einen Bausatz aus einem becherförmigen Gefäß und einem Kolbenfilter gelöst, wenn der Kolbenfilter gemäß einer Kombination der oben erläuterten, vorteilhaften Ausgestaltungen ausgebildet ist.

Im folgenden wird der erfindungsgemäße Kolbenfilter anhand zweier Ausführungsbeispiele unter Zuhilfenahme der Zeichnungen beschrieben.

### Es zeigen:

- Figur 1: einen Kolbenfilter in einer Ansicht quer zur Filterrichtung im Halbschnitt;
- Figur 2: eine Ansicht des Kolbenfilters der Figur 1 in Filterrichtung;
- Figur 3: eine Ansicht eines weiteren Ausführungsbeispiels des erfindungsgemäßen Kolbenfilters in einer Ansicht quer zur Filterrichtung im Halbschnitt;
- Figur 4A: eine Ansicht eines Dichtelements in Filterrichtung im spannungsfreien und unverformten Ruhezustand;
- Figur 4B: das Dichtelement der Figur 4A in einer Ansicht quer zur Filterrichtung;
- Figur 4C: das Dichtelement der Figur 4A in einer Ansicht in Filterrichtung im in das Zubereitungsgefäß eingesetzten Zustand;
- Figur 4D: eine Ansicht eines weiteren Ausführungsbeispiels des Dichtelements in Filterrichtung im spannungsfreien und unverformten Zustand;
- Figur 4E: das Dichtelement der Figur 4D in einer Ansicht quer zur Filterrichtung;
- Figur 5: einen Bausatz bestehend aus Zubereitungsgefäß und einem erfindungsgemäßen Kolbenfilter.

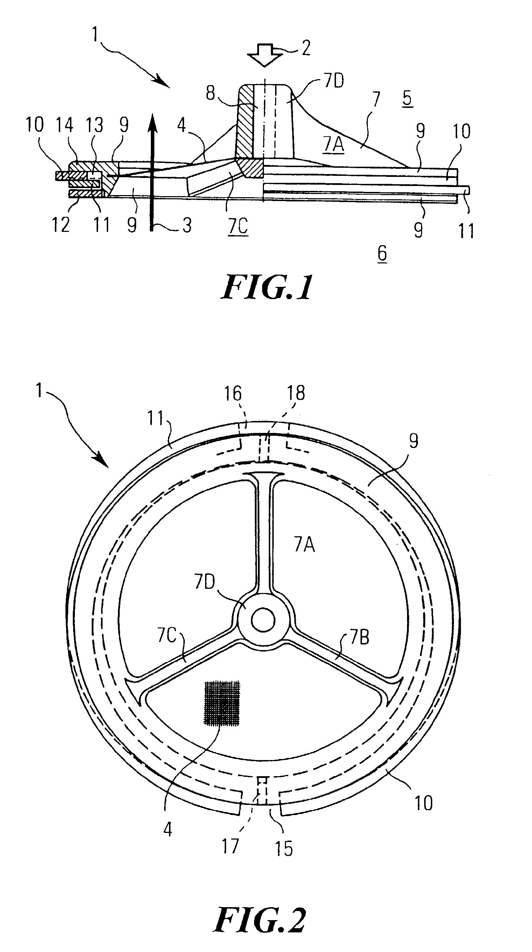

Figur 1 zeigt ein Ausführungsbeispiel des erfindungsgemäßen Kolbenfilters 1 in einer Ansicht quer zur Filterrichtung, die durch den Blockpfeil 2 gekennzeichnet ist. Die linke Hälfte der Figur 1 ist im Radialschnitt dargestellt. In diese Filterrichtung 2 wird der Kolbenfilter 1 gedrückt, wodurch das Kaffeegetränk in Richtung des Pfeils 3 durch das Filterelement 4 gedrückt wird. Die Lochgröße des Filterelementes 4 ist so bemessen, dass kein Kaffeepulver oder Kaffeemehl in Richtung des Pfeils 3 das Filterelement passieren kann. Somit befindet sich nach Durchdrücken des Kolbenfilters in Filterrichtung 2 auf der Seite 5 des Kolbenfilters eine im wesentliche kaffeepulverfreie Getränkemischung, während sich auf der Seite 6 des Kolbenfilters der Kaffeesatz sammelt.

Das Filterelement 4 ist aus einem Drahtgewebe oder einem Kunststoffgewebe gefertigt. Der Filterträger ist aus einem Kolbenträger 7 aufgebaut, der Speichen 7A, 7B und 7C (vgl. Figur 2) ausbildet, die von einem Nabenbereich 7D ausgehen. In der Nabe 7D ist eine Befestigungsvorrichtung 8 für eine Kolbenstange (nicht gezeigt) gezeigt, mit der der Kolbenfilter in Filterrichtung 2 von Hand drückbar ist. Zum Filterträger gehört außerdem ein ringförmiger Teil 9 einer Dichtelementaufnahme, in der zwei Dichtelemente 10, 11 aufgenommen sind. Das Filterelement 4 ist vom Teil 9 der Dichtmittelaufnahme und vom Kolben 7 umspritzt.

Das Teil 9 der Dichtelementaufnahme bildet den Außendurchmesser des kreisrunden Kolbenfilters 1. Nach unten in Richtung des Kaffeesatzes weisend, bildet das Teil 9 einen Absatz mit verkleinertem Durchmesser aus. Die Dichtelementaufnahme wird im Ausführungsbeispiel der Figur 1 vom Teil 9 und einem auf das Teil 9 aufgepressten Haltering 12 in Form einer sich in radialer Richtung nach außen öffnenden Aufnahmenut 13 gebildet. Dazu bildet das Teil 9 gegenüber dem Haltering 12 eine Schulter 14 aus. Die Dichtelemente 10, 11 sind in die Aufnahmenut 13 eingelegt und liegen in Filterrichtung 2 gegen die Schulter 14 und den Haltering 12 an. Durch die Filterbewegung werden die Dichtelemente 10, 11 gegen die Schulter 14 gedrückt, so dass beim Filtern die Verbindungsstelle zwischen dem Haltering 12 und dem Teil 9 entlastet wird.

In Figur 1 ist der Kolbenfilter 1 in aus einem nicht gezeigten Zubereitungsgefäß entfernten Zustand gezeigt. Die Dichtringe 10, 11 befinden sich im Ruhezustand, d. h. sind nicht elastisch verformt.

In Figur 2 ist der Kolbenfilter 1 der Figur 1 in einer Ansicht in Richtung des Pfeils der Figur 1, also in Filterrichtung, dargestellt. Die Kreisform des Kolbenfilters 1 ist deutlich zu erkennen, die Speichen 7A, 7B, 7C, die das Filterelement 4 auf beiden Seiten abstützen, erstrecken sich in radialer Richtung von der Nabe 7D und sind einstückig mit dem Teil 9 der Dichtelementaufnahme verbunden. Die Dichtelemente 10, 11 weisen im Ruhezustand einen größeren Außendurchmesser als der Kolbenfilter 1 und ragen daher über den Außendurchmesser des Teiles 9 der Dichtelementaufnahme des Halteringes 12, die beide im wesentlichen den gleichen Durchmesser aufweisen. In radialer Richtung sind die Dichtelement 10, 11 innerhalb der Aufnahmenut 13 verschieblich. Zur deutlichen Darstellung sind die Dichtelemente 10, 11 in radialer Richtung jeweils in entgegengesetzter Richtung maximal verschoben.

Das untere Dichtelement 11 ist in der Figur 2 nach oben, in der Figur 1 nach rechts bis zum Anschlag verschoben, das obere Dichtelement 10 in der Figur 2 nach unten, in der Figur 1 nach links bis zum Anschlag, also bis der Innendurchmesser des Dichtelementes 10 am Außendurchmesser des Grundes der Aufnahmenut 13 anliegt, verschoben dargestellt.

Die Dichtelemente 10, 11 sind identisch und als Dichtringe ausgebildet, die einen im wesentlichen rechteckigen Querschnitt aufweisen, wobei die Dichtelemente 10, 11 eine leichte Scheibenform aufweisen, in dem die längere Kante des rechteckigen Querschnittes der Dichtelemente sich in deren radialer Richtung erstreckt. Das obere Dichtelement 10 weist eine Aussparung 15 auf, an der das Dichtelement 10 unterbrochen ist. Die Aussparung 15 erstreckt sich im wesentlichen in radialer Richtung. Ebenso weist das Dichtelement 11 eine Aussparung 16 auf.

Die Schulter 14 und der Haltering 12 weisen an der der Aussparung 13 zugewandten, die Aufnahmenut bildenden Seite jeweils Vorsprünge 17 und 18 auf, die relativ zueinander um 180° versetzt sind. Diese stegförmigen Vorsprünge bilden Positionierhilfen für die Dichtringe 10, 11. So greift die obere an der Schulter 14 angebrachte Positionierhilfe 17 in die Aussparung 15 des Dichtringes 10, und die untere, am Haltering 12 angebrachte Positionierhilfe 18 greift in die Aussparung 16 des Dichtringes 11. Die Positionierhilfen 17, 18 bilden zusammen mit den Aussparungen 15, die in einer Doppelfunktion neben der Radialelastizität auch dichtelementseitige Positionierhilfen ausbilden, eine Fixierung in Umfangsrichtung der Dichtelemente 10, 11, wodurch eine Drehung der Dichtelemente 10, 11 relativ zum Kolbenfilter vermieden wird. Durch die Gegenüberlage der Positionierhilfen wird bei den identisch ausgebildeten Dichtelementen vermieden, dass die Aussparungen 17, 18 übereinander zu liegen kommen und Kaffeepulver durchlassen. Die Dichtringe 10, 11 sind nach alledem analog zu den Kolbendichtringen bei einem Verbrennungskraftmotor aufgebaut und befestigt.

Auf die Positionierhilfe 17 bzw. 18 kann beispielsweise verzichtet werden, wenn nur ein Dichtring vorgesehen ist, der keine Aussparung aufweist oder dessen an der Aussparung gegenüberliegenden Enden im in das Zubereitungsgefäß eingesetzten Zustand vollflächig aufeinander liegen, wenn der Dichtring in das Zubereitungsgefäß eingesetzt ist, so dass keine Lücke entstehen kann, durch die Kaffeepulver am Filterelement vorbeiströmen kann.

Der Außendurchmesser der Aufnahmenut 13 ist kleiner als die Innendurchmesser der Dichtelemente 10, 11 im Ruhezustand, so dass diese sich quer zur Filterrichtung elastisch verformen, indem die einander gegenüberliegenden Enden der jeweiligen Aussparung 15, 16 aufeinanderzu bewegt und dadurch der Außendurchmesser der Dichtelemente 10, 11 elastisch verringert wird. Durch diese Verformung legen sich die Dichtringe 10, 11 elastisch an die Innenwand des Zubereitungsgefäßes an und dichten die eine Seite 5 des Kolbenfilters gegen die in Filterrichtung 2 gelegene andere Seite 6 des Kolbenfilters ab. Durch die Materialwahl und die Formgebung der Dichtringe sind diese trotz der Elastizität quer zur Filterrichtung in Filterrichtung 2 im wesentlichen starr, so dass auch bei starkem Druck die Dichtelemente 10, 11 nicht nachgeben. Die Anzahl der im Kolbenfilter 1 vorgesehenen Dichtelemente kann beliebig hoch sein.

Im Ausführungsbeispiel der Figuren 1 und 2 dient der Haltering 12 zum einfachen Einsetzen der Dichtelemente 10, 11 in die Aufnahmenut 13 und kann wiederholt vom Teil 9 der Dichtelementaufnahme abgenommen und auf dieses wieder aufgesetzt werden. Dadurch sind die Dichtelemente 10, 11 leicht zu entnehmen und können auf einfache Weise gereinigt werden.

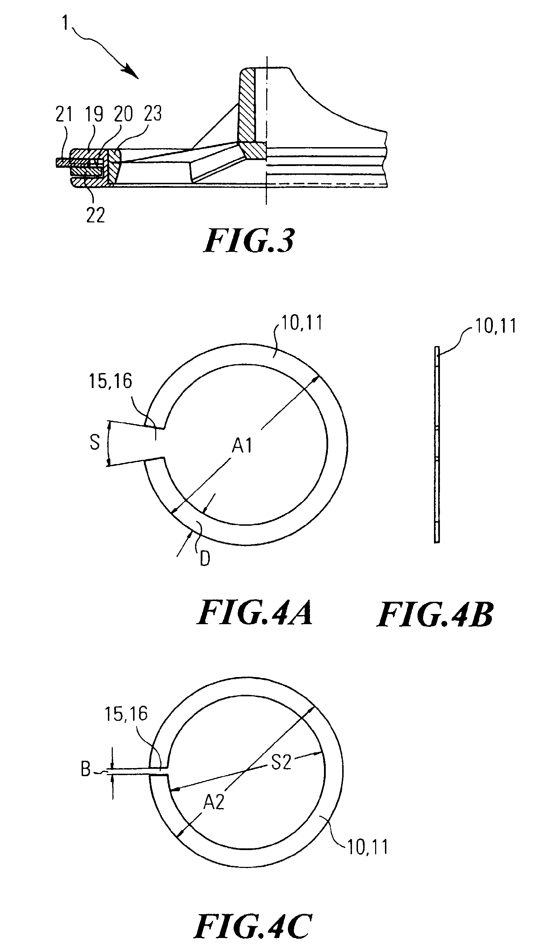

Ein weiteres Ausführungsbeispiel des Kolbenfilters 1 ist in der Figur 3 gezeigt. Im folgenden wird nur auf die Unterschiede des Ausführungsbeispieles der Figur 3 zu dem Ausführungsbeispiel der Figuren 1 und 2 eingegangen. Der einzige Unterschied besteht in der einstückigen Ausgestaltung der Dichtmittelaufnahme 19, die als Ring mit einer Aufnahmenut 20 für die Dichtelemente 21, 22 ausgebildet sind. Die Dichtelemente 21, 22 entsprechen den Dichtelementen 10, 11, so dass auf ihre Funktion und Ausgestaltung hier nicht weiter eingegangen werden muss.

Die einstückige Dichtmittelaufnahme 19 bildet die Aufnahmenut 13 einstückig aus und ist auf die Außenfläche des ringförmigen Teiles 23 aufgepresst. Das ringförmige Teil 23 ist einstückig mit der Filterhalterung verbunden, die im übrigen der Filterhalterung des Ausführungsbeispieles der Figuren 1 und 2 entspricht und wie diese um das Filterelement gespritzt ist.

Der Haltering 12 der Ausführungsbeispiele der Figur 1 und 2 und die ringförmige Dichtmittelaufnahme 19 können angepresst, mit Nocken gesichert, verklebt oder ultraschallverschweißt werden.

In der Figur 4A ist eine Draufsicht auf ein Dichtelement 10, 11 in einem unverformten Zustand gezeigt. Die Enden der Aussparungen 15, 16 begrenzen einen Kreissektor S, der Außendurchmesser A1 im nicht vorgespannten, unverformten Ruhezustand ist größer als der Innendurchmesser des Zubereitungsgefäßes. Ein mögliches Übermaß beträgt etwa 1 mm.

Im Querschnitt der Figur 4B des Dichtelementes 10, 11 ist die Ringscheibenform des Dichtringes 10, 11 deutlich zu erkennen. Diese Ringscheibenform gewährleistet eine gute Starrheit des Dichtringes in Filterrichtung bei gleichzeitig hoher Elastizität ausschließlich quer zur Filterrichtung.

In Figur 4C ist der Dichtring 10, 11 im vorgespannten, elastisch verformten Zustand in einer Ansicht in Filterrichtung dargestellt. In diesem Zustand ist der Dichtring 10, 11 in das Zubereitungsgefäß eingesetzt und stützt sich dichtend an der Innenwand des Zubereitungsgefäßes ab. Der Außendurchmesser A2 in diesem Zustand entspricht dem Innendurchmesser des Zubereitungsgefäßes. Der Innendurchmesser 12 des Dichtringes 10, 11 im vorgespannten Zustand ist etwas größer als der Außendurchmesser der Aussparung 13, 20, in der die Dichtmittel 10, 11 im Kolbenfilter aufgenommen sind. Die Durchmesserverkleinerung findet statt, indem die Enden der Aussparungen 15, 16 einander angenähert werden. In der vollständig vorgespannten Stellung der Figur 4C liegen die Enden der Aussparungen 15, 16 parallel zueinander und können bei anderer Ausgestaltung vollflächig aneinander aufliegen. Beim Ausführungsbeispiel der Figur 4C ist die Breite B der Aussparungen 15, 16 in Umfangsrichtung um etwa einen Millimeter größer als die Breite der Positionierhilfen bzw. Vorsprünge 17, 18 der Dichtelementaufnahme.

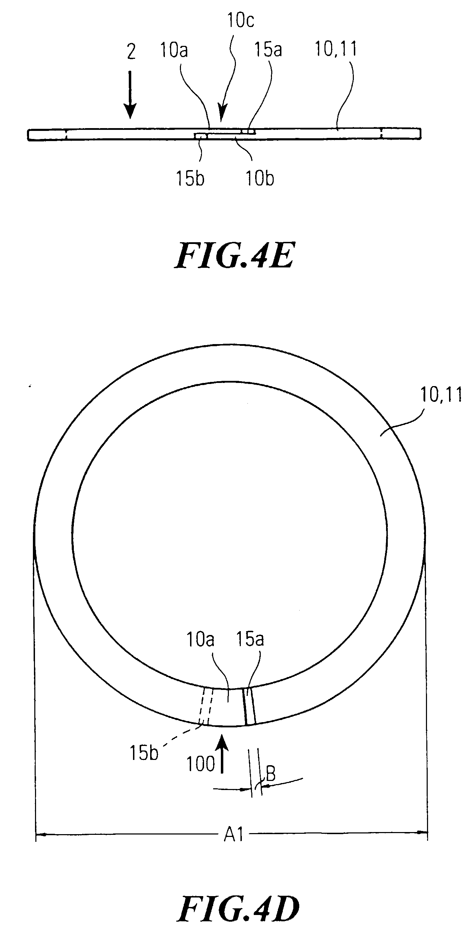

In den Figuren 4D und 4E ist ein weiteres Ausführungsbeispiel des Dichtringes 10, 11 gezeigt. Im Unterschied zu dem Ausführungsbeispiel der Figuren 4A bis 4C bildet der Dichtring 10, 11 zwei Zungen 10a, 10b aus, die sich in einem Bereich 10c, der Aussparung 15, 16 des Ausführungsbeispiels der Figuren 4A bis 4C entspricht, überlappen. Die Dicke der Zungen 10a, 10b in Filterrichtung 2 beträgt in etwa die Hälfte der Dichtringes 10, 11, so daß die in Filterrichtung zwei gelegenen Stirnflächen des Dichtringes 10, 11 jeweils eine Ebene bilden. Die Zunge 10a, 10b des jeweils gegenüberliegenden Endes des Dichtringes 10, 11 ist zu diesem Zweck in einer Aussparung gleitend aufgenommen. Die Abmessung dieser Aussparung in Umfangsrichtung ist so bemessen, daß zwischen der jeweiligen Zunge 10a, 10b des einen Endes des Dichtringes 10, 11 und dem Ende der Ausnehmung eine Lücke 15a und 15b verbleibt. Die Breite B diese Lücke 15a, 15b bestimmt, um wieviel der Außendurchmesser A1 im Ruhezustand zusammengedrückt werden kann, und kann der Breite B der Aussparung 15, 16 des Ausführungsbeispiels der Figuren 4A bis 4C entsprechen.

Durch die Überlappung der Zungen 15a, 15b wird eine sichere Abdichtung der beiden durch den Kolbenfilter getrennten Behälterhälften erreicht, auch wenn der Dichtring 10, 11 nicht vollständig zusammengedrückt wird. Bei einer derartigen Ausgestaltung ist daher ein einzelner Dichtring 10, 11 im Kolbenfilter ausreichend.

Die oben beschriebenen Ausführungsbeispiele des erfindungsgemäßen Kolbenfilters haben den Vorteil, dass durch die Wahl von Dichtringen 10, 11 mit unterschiedlichen radialen Dicken D (vgl. Figur 4A) ein und derselbe Kolbenfilter bei Zubereitungsgefäßen von verschiedenen Durchmessern eingesetzt werden können. Die Dichtringe können aufgrund ihrer Elastizität oder aufgrund des Halteringes 12 einfach aus der Dichtelementaufnahme entfernt und gereinigt werden. Die Dichtringe 10, 11, 21, 22 besitzen sehr gute Gleiteigenschaften an Glas oder Kunststoffwänden und sind spülmaschinenfest. Sie dichten den Zwischenraum zwischen Kolbenfilter 1 und der Innenwand des Zubereitungsgefäßes 1 sehr effizient ab. Das Ausführungsbeispiel der Figur 3 ermöglicht den kompletten Austausch der Dichtmittelaufnahme 19 mitsamt den Dichtelementen 21, 22, beispielsweise um an Zubereitungsgefäße mit verschiedenen Innendurchmessern angepasst zu werden.

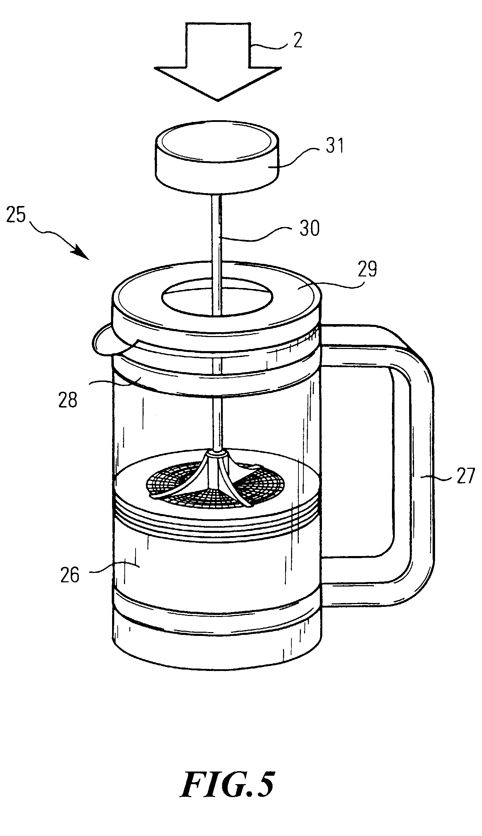

Die Figur 5 zeigt einen Bausatz 25 einer Stabfilterkanne bestehend aus einem Gefäß 26 mit einem Henkel 27, der über schellenförmige Befestigungen 28 am Gefäß angebracht ist. Im Zubereitungsgefäß 26 ist der Kolbenfilter 1 zu sehen, an dem eine in einem Dekkel 29 in Filterrichtung 2 verschieblich gehaltenen Kolbenstange 30 befestigt ist. Die Kolbenstange ist oben mit einem Griffstück 31 versehen, das in der Filterendstellung in den Deckel 29 versenkt ist.

## Patentansprüche

1. Kolbenfilter für eine Stabfilterkanne, insbesondere für die Kaffeezubereitung mittels einer Kaffeepresse, der innerhalb eines im wesentlichen hohlzylindrischen Zubereitungsgefäßes der Stabfilterkanne in eine Filterrichtung hin- und herbewegbar ist, und der mit einem sich im wesentlichen quer zur Filterrichtung erstreckenden Filterelement und mit einem quer zur Filterrichtung elastisch verformbaren, an der Innenwand des Zubereitungsgefäßes sich radialelastisch abstützenden Dichtelement versehen ist, welches das Filterelement umgibt, **dadurch gekennzeichnet,** dass das Dichtelement (10, 11, 21, 22) ausschließlich radialelastisch und in Filterrichtung (2) im wesentlichen starr ist.

2. Kolbenfilter nach Anspruch 1, **dadurch gekennzeichnet,** dass das Dichtelement (10, 11, 21, 22) als Dichtring im wesentlichen ringförmig oder ringscheibenförmig ausgestaltet ist.

3. Kolbenfilter nach Anspruch 2, **dadurch gekennzeichnet,** dass der Dichtring (10, 11, 21, 22) eine sich im wesentlichen in radialer Richtung erstreckende Aussparung (15, 16) aufweist.

4. Kolbenfilter nach einem der Ansprüche 1 bis 3, **dadurch gekennzeichnet,** dass der Außendurchmesser (A1) des Dichtringes (10, 11, 21, 22) in einem unverformten Ruhezustand größer ist als der Innendurchmesser (A2) des Zubereitungsgefäßes (26).

5. Kolbenfilter nach Anspruch 3 oder 4, **dadurch gekennzeichnet,** dass die einander gegenüberliegenden Enden der Aussparung (15, 16) des Dichtringes (10, 11 21, 22) bei in das Zubereitungsgefäß (26) eingesetztem Kolbenfilter (1) weniger weit voneinander beabstandet sind als bei aus dem Zubereitungsgefäß (26) entferntem Kolbenfilter (1).

6. Kolbenfilter nach einem der Ansprüche 3 bis 5, **dadurch gekennzeichnet,** dass die einander gegenüberliegenden Enden der Aussparung (15, 16) bei vollständig vorgespannten Dichtring (10, 11, 21, 22) im wesentlichen vollflächig aufeinanderliegen.

7. Kolbenfilter nach einem der Ansprüche 1 bis 3, **dadurch gekennzeichnet,** dass die Aussparung des Dichtringes (10, 11) durch zumindest zwei, vorzugsweise aufeinanderliegenden Zungen (15a, 15b) abgedeckt ist, die sich in Filterrichtung (2) bei in das Zubereitungsgefäß (26) eingesetztem Kolbenfilter (1) überlappen.

8. Kolbenfilter nach Anspruch 7, **dadurch gekennzeichnet,** dass sich die Zungen (15a, 15b) in Filterrichtung (2) im unverformten Ruhezustand des Dichtringes (10, 11) überlappen.

9. Kolbenfilter nach einem der oben genannten Ansprüchen, **dadurch gekennzeichnet,** dass der Kolbenfilter (1) seine Dichtelementaufnahme (9, 12, 19) aufweist, in der das Dichtelement (10, 11, 21, 22) in Filterrichtung (2) im wesentlichen unverschieblich gehalten ist.

10. Kolbenfilter nach Anspruch 9, **dadurch gekennzeichnet,** dass die Dichtelementaufnahme (9, 12, 19) eine im Umfangsrichtung umlaufende, sich quer zur Filterrichtung nach außen öffnende Aufnahmenut (13, 20) aufweist, in die das Dichtelement (10, 11, 21, 22) einsetzbar ist.

11. Kolbenfilter nach Anspruch 10, **dadurch gekennzeichnet,** dass die Aufnahmenut (13, 20) in Filterrichtung (2) an einer Seite von einem als separates Teil ausgebildeten Haltering (12) begrenzt ist.

12. Kolbenfilter nach Anspruch 11, **dadurch gekennzeichnet,** dass der Haltering (12) abnehmbar am Kolbenfilter (1) gehalten ist.

13. Kolbenfilter nach einem der Ansprüche 9 bis 12, **dadurch gekennzeichnet,** dass die Dichtelementaufnahme (19) als ein separates Teil ausgebildet ist, dass mit einer das Filterelement haltenden Filterelementhalterung (7, 7A, 7B, 7C, 7D, 9, 23) des Kolbenfilters (1) verbunden ist.

14. Kolbenfilter nach Anspruch 13, **dadurch gekennzeichnet,** dass die Dichtelementaufnahme (13, 20) auf den Kolbenfilter (1) aufgepresst ist.

15. Kolbenfilter nach einem der Ansprüche 9 bis 14, **dadurch gekennzeichnet,** dass die Dichtelementaufnahme (9, 12, 19) und das Dichtelement (10, 11, 21, 22) jeweils mit einer Positionierhilfe (15, 16, 17, 18) versehen sind, die zusammenwirken und die Lage des Dichtelementes (10, 11, 21, 22) in Umfangsrichtung des Kolbenfilters (1) relativ zum Kolbenfilter bestimmen.

16. Kolbenfilter nach Anspruch 15, **dadurch gekennzeichnet**, dass die dichtelementaufnahmeseitige Positionierhilfe (17) als ein Vorsprung ausgebildet ist, der bei in die Dichtelementaufnahme (9, 12, 19) eingelegtem Dichtelement (10, 21) in eine Aussparung (15) des Dichtelementes (10, 21) zugreift.

17. Kolbenfilter nach einem der oben genannten Ansprüche, **dadurch gekennzeichnet,** dass der Kolbenfilter (1) mit zumindest zwei in Filterrichtung (2) hintereinander angeordneten Dichtelementen (10, 11, 21, 22) versehen ist.

18. Kolbenfilter nach Anspruch 17, **dadurch gekennzeichnet,** dass die Dichtelemente (10, 11, 21, 22) in der Dichtelementaufnahme (9, 12, 19) aufeinanderliegend, vorzugsweise unmittelbar aufeinanderliegend aufgenommen sind.

19. Kolbenfilter nach einem der oben genannten Ansprüche, **dadurch gekennzeichnet,** dass die Dichtelementaufnahme (9, 12, 19) zumindest zwei Positionierhilfen (17, 18) aufweist, die mit jeweils einem Dichtelement (10, 11, 21, 22) zusammenwirken.

20. Kolbenfilter nach Anspruch 18 oder 19, **dadurch gekennzeichnet,** dass die Positionierhilfen (15, 16, 17, 18) in Umfangsrichtung voneinander beabstandet sind.

21. Kolbenfilter nach einem der oben genannten Ansprüche, **dadurch gekennzeichnet,** dass der Kolbenfilter (1) mit einer sich parallel zu Filterrichtung weg vom Filterelement (4) erstreckenden Kolbenstange (30) verbunden ist.

22. Kolbenfilter nach einem der oben genannten Ansprüche, **dadurch gekennzeichnet,** dass der Kolbenfilter mit einem Deckel (29) für das Zubereitungsgefäß (26) versehen ist, wobei der Kolbenfilter (1) im Deckel (29) in Filterrichtung (2) verschieblich gelagert ist.

23. Kolbenfilter nach einem der oben genannten Ansprüche, **dadurch gekennzeichnet,** dass das Dichtelement (10, 11, 21, 22) aus einem Kunststoff gefertigt ist.

24. Kolbenfilter nach einem der oben genannten Ansprüche, **dadurch gekennzeichnet,** dass die Dichtelementaufnahme aus einem Kunststoff gefertigt ist.

25. Kolbenfilter nach einem der oben genannten Ansprüche, **dadurch gekennzeichnet,** dass das Filterelement (4) aus einem Drahtgewebe oder aus einem Stoffgewebe hergestellt und vorzugsweise von der Filterelementhalterung umspritzt ist.

26. Bausatz aus einem becherförmigen Gefäß und einem Kolbenfilter, **dadurch gekennzeichnet,** dass der Kolbenfilter (1) nach einem der oben genannten Ansprüche ausgestaltet ist.
